**Europäisches Patentamt**

**European Patent Office**

**Office européen des brevets**

(19)

(11) Veröffentlichungsnummer: **0 467 034 A1**

# EUROPÄISCHE PATENTANMELDUNG

(12)

(21) Anmeldenummer: **91107826.9**

(22) Anmeldetag: **15.05.91**

(51) Int. Cl.⁵: **G09F 9/30**, G08G 1/09, G09G 3/24

(30) Priorität: **17.07.90 DE 4022650**

(43) Veröffentlichungstag der Anmeldung:
**22.01.92 Patentblatt 92/04**

(84) Benannte Vertragsstaaten:
**AT BE CH DE DK ES FR GB GR IT LI LU NL SE**

(71) Anmelder: **Dambach-Werke GmbH**
**Adolf-Dambach-Strasse**
**W-7560 Gaggenau(DE)**

(72) Erfinder: **Killinger, Erich, Dr.-Ing.**
**Nelkenstrasse 28**
**W-7560 Gaggenau(DE)**

(74) Vertreter: **Vogel, Georg**
**Pat.-Ing. Georg Vogel**
**Hermann-Essig-Strasse 35**
**W-7141 Schwieberdingen(DE)**

(54) **Anzeigevorrichtung.**

(57) Eine Anzeigevorrichtung für beliebige Anzeigen, die sich aus mindestens einem nicht veränderbaren Anzeigenteil und einem beliebig wählbaren Anzeigenteil zusammensetzbar sind, insbesondere Wechselverkehrszeichen wird nach der Erfindung dadurch im Aufwand reduziert und in der Steuerung vereinfacht, daß für jeden nicht veränderbaren Anzeigenteil getrennte, beleuchtbare Bündel von Lichtleitfasern vorgesehen sind, deren freie Enden entsprechend dem zugeordneten, nicht veränderbaren Anzeigenteil verteilt in einer Anzeigetafel angeordnet sind, daß der beliebig wählbare Anzeigenteil mittels eines prozessorgesteuerten Matrixfeldes von Anzeigenelementen darstellbar ist, wobei jedes Anzeigeelement eine beleuchtete Lichtleitfaser mit einer individuellen Schalteinrichtung für die Freigabe oder Sperrung des zugeordneten Lichtweges aufweist, und daß der ausgewählte, nicht veränderbare Anzeigeteil und der im Matrixfeld eingestellte Anzeigenteil gemeinsam angezeigt sind.

FIG.1

EP 0 467 034 A1

Die Erfindung betrifft eine prozessorgesteuerte Anzeigevorrichtung für Wechselverkehrszeichen, die auf einer Anzeigetafel jeweils aus mindestens einem nicht veränderbaren Anzeigeteil und einem beliebig wählbaren Anzeigeteil zusammensetzbar sind.

Eine derartige prozessorgesteuerte Anzeigevorrichtung ist, wie die DE 79 31 474 U1 zeigt, als Windanzeigeeinrichtung für Straßenbrücken und dgl. ausgebildet, wobei auf der Anzeigetafel ein Verkehrszeichen, hier ein Warndreieck, fest aufgebracht ist. Über den Prozessrechner werden, von einem Windmesser gesteuert, neben Fahrzeugbildern auf der Anzeigetafel Geschwindigkeitsangaben als veränderliche Anzeigeteile angezeigt, die von der gemessenen Windgeschwindigkeit abhängig sind. Diese veränderlichen Anzeigeteile sind Zahlenangaben, für die es verschiedene bekannte Lösungen gibt.

Aus der DE 31 28 329 A1 ist eine Wechselzeichen-Signalgabevorrichtung bekannt, bei der auf einer Anzeigetafel verschiedene, nicht veränderbare Anzeigeteile darstellbar sind. Jedem Anzeigeteil ist ein Bündel von gleichzeitig beleuchtbaren Lichtleitfasern zugeordnet, die in der Anzeigetafel entsprechend dem zugeordneten Anzeigeteil gesteckt sind. Die Anzeigeteile können einzeln oder gemeinsam zur Anzeige gebracht werden, wobei durch Einschalten der den Bündeln zugeordneten Lichtquellen die betreffenden Anzeigeteile ein- und ausgeschaltet werden können.

Aus dem DE 81 24 380 U1 ist eine Wechselanzeigeeinrichtung, insbesondere für Verkehrssignalanzeigen, bekannt, bei der die Lichtleitfasern eines Bündels über eine Schaltmatrix aus einem Flüssigkristallbaustein zu der Anzeigetafel geführt sind. Damit läßt sich der Lichtweg über jede Lichtleitfaser individuell freigeben oder sperren, so daß beliebig wählbare Anzeigeteile auf der Anzeigetafel darstellbar sind.

Das DE 89 13 499 U1 zeigt eine Anzeigevorrichtung für alpha-numerische Anzeigen, die von dem Prinzip der wahlweise freigebbaren oder sperrbaren Lichtleitfaser eines Bündels von Lichtleitfasern Gebrauch macht. Die Anzeigevorrichtung enthält aber mehrere Bündel von Lichtleitfasern, die in der Anzeigetafel jeweils matrixförmig angeordnet sind. Jedes Bündel kann ein beliebig wählbares Anzeigeteil darstellen. Sind n Bündel von Lichtleitfasern vorgesehen, dann können gleichzeitig n Anzeigeteile oder auch ein n-farbiges Anzeigeteil dargestellt werden, wenn den Bündeln unterschiedliche Farbfilter vorgeschaltet sind. Da die Anzeigetafel pro Matrixpunkt der n Matrizen ein Schaltelement benötigt, ist der Aufwand für diese Anzeigevorrichtung sehr hoch und auch der Steuerungsaufwand ist beachtlich, da die Schaltelemente sequentiell angesteuert werden müssen.

Es ist Aufgabe der Erfindung, eine prozessorgesteuerte Anzeigevorrichtung für Wechselverkehrszeichen der eingangs erwähnten Art zu schaffen, bei der der Aufwand für die Anzeigeelemente wesentlich reduziert und deren Steuerung wesentlich vereinfacht werden kann.

Diese Aufgabe wird nach der Erfindung dadurch gelöst, daß der nicht veränderbare Anzeigeteil aus möglichen Anzeigeteilen auswählbar ist, daß für jeden nicht veränderbaren Anzeigeteil getrennte, beleuchtbare Bündel von Lichtleitfasern vorgesehen sind, deren freie Enden entsprechend dem zugeordneten, nicht veränderbaren Anzeigeteil in der Anzeigetafel verteilt angeordnet sind, daß der beliebig wählbare Anzeigeteil mittels eines Matrixfeldes von Anzeigeelementen darstellbar ist, wobei jedes dieser Anzeigeelement eine beleuchtbare Lichtleitfaser mit einer individuellen Schalteinrichtung für die Freigabe oder Sperrung des zugeordneten Lichtweges aufweist, und daß der ausgewählte, nicht veränderbare Anzeigeteil und der im Matrixfeld eingestellte, wählbare Anzeigeteil gemeinsam angezeigt sind.

Diese Ausgestaltung macht sich die Tatsache zunutze, daß viele Verkehrszeichen einen gleichbleibenden Anzeigeteil, z.B. einen dreieckförmigen oder einen runden Rahmen, aufweisen. Diese nicht veränderbaren Anzeigeteile werden durch beleuchtbare Bündel von Lichtleitfasern dargestellt, die als Ganzes auswählbar und ansteuerbar sind. Diese Anzeigeelemente erfordern daher kein Schaltelement. Die Lichtleitfaserenden werden entsprechend dem zugeordneten Anzeigeteil in der Anzeigetafel "gesteckt". Dabei bedeutet "Bündel" auch eine aus mehreren Einzelbündeln bestehende Einheit, wenn für die Darstellung des Anzeigeteils sehr viele Lichtleitfasern benötigt werden.

Nur das kleinere Matrixfeld erfordert pro Lichtleitfaser ein Schaltelement und die Steuerung muß nur die wesentlich kleinere Anzahl von Anzeigeelementen steuern, so daß im Endeffekt der Aufwand für die Anzeigeelemente gegenüber einem größeren, die Anzeige ganz umfassenden, prozessorgesteuerten Matrixfeld von Anzeigeelementen mit Schaltelementen wesentlich reduziert und die Steuerung stark vereinfacht ist.

Der nicht veränderbare Anzeigeteil läßt sich dadurch farblich von dem beliebig wählbaren Anzeigeteil abheben, daß den nicht veränderbaren Anzeigeteilen jeweils zugeordneten Bündeln von Lichtleitfasern gleich- oder andersfarbige Filter vorschaltbar sind.

Dies kann nach einer Ausgestaltung so ausgenützt werden, daß die nicht veränderbaren Anzeigeteile jeweils als dreieckförmige oder runde Anzeige aus gleichmäßig verteilten Lichtleitfaserenden ausgebildet sind, die das Matrixfeld umrahmen.

Die Auswahl des nicht veränderbaren Anzeigeteils einer Anzeige erfolgt nach einer besonders einfachen Ausgestaltung dadurch, daß der nicht veränderbare Anzeigeteil durch Einschalten einer dem zugeordneten Bündel von Lichtleitfasern zugeordneten Lichtquelle auswählbar ist.

Eine Weiterbildung der erfindungsgemäßen Anzeigevorrichtung sieht vor, daß die Anzeigetafel einen zusätzlichen Anzeigeteil aufweist, der als prozessorgesteuertes Matrixfeld ausgebildet ist und das zur Darstellung von Schriften oder Laufschriften verwendbar ist, wobei vorzugsweise vorgesehen ist, daß der zusätzliche Anzeigeteil als Schriftfeld unterhalb der aus nicht veränderbarem Anzeigeteil und beliebig wählbaren Anzeigeteil gebildeten Anzeige angeordnet ist.

Die Ausbildung der schaltbaren Anzeigeelemente ist so vorgenommen, daß als Anzeigeelement des beliebig wählbaren Anzeigeteils und des Schriftfeldes jeweils eine in einem Fach eines Gehäuses drehbar gelagerte Klappe vorgesehen ist, daß die jedem Anzeigeelement zugeordnete Lichtleitfaser mit einem Abstrahlkörper verbunden ist, der im Boden des Faches fest angeordnet und in das Fach außerhalb der Drehachse der Klappe eingeführt ist, daß die Klappe mittels zweier Elektromagnete steuerbar und mittels deren Remanenz in der Nichtanzeigestellung oder in der Anzeigestellung haltbar ist, daß die Klappe in der Nichtanzeigestellung das Fach abdeckt und in der Anzeigestellung um 90° verschwenkt an dem Abstrahlkörper anliegt und so das Lichtleitfaserende freigibt und daß vor der in der Anzeigestellung befindlichen Klappe in der Anzeigetafel in Verlängerung des Abstrahlkörpers ein Lichtkollektor festgelegt ist. Für die Abgabe heller Lichtpunkte in der Anzeigetafel ist dabei vorgesehen, daß der Lichtkollektor als Abschnitt eines Festkörpers aus Glas oder durchsichtigem Kunststoff ausgebildet ist, bei dem zumindest die dem Abstrahlkörper zugekehrte Stirnseite poliert ist.

Die Erfindung wird anhand eines in den Zeichnungen dargestellten Ausführungsbeispiels näher erläutert. Es zeigt:

Fig. 1    schematisch die Vorderansicht einer als Wechselverkehrszeichen ausgebildeten Anzeigevorrichtung nach der Erfindung,

Fig. 2    eine schematische Seitenansicht der Anzeigevorrichtung nach Fig. 1 mit der Anordnung der Lichtleitfasern der einzelnen Bündel,

Fig. 3    im Schnitt ein schaltbares Anzeigeelement des Matrix- oder Schriftfeldes in der Anzeigestellung,

Fig. 4    im Schnitt das schaltbare Anzeigeelement nach Fig. 3 in der Nichtanzeigestellung und

Fig. 5    schematisch eine Steuerschaltung für das Bündel von Lichtleitfasern des Matrixfeldes.

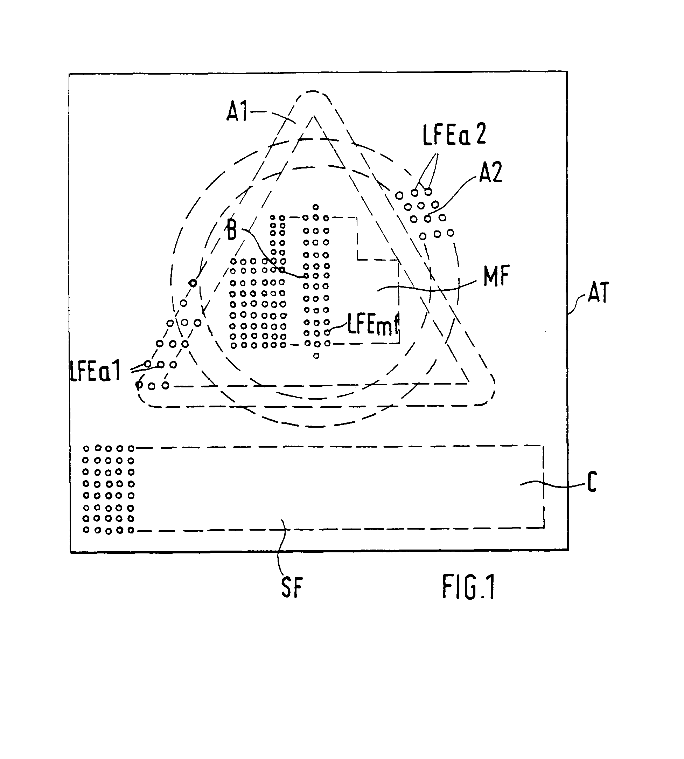

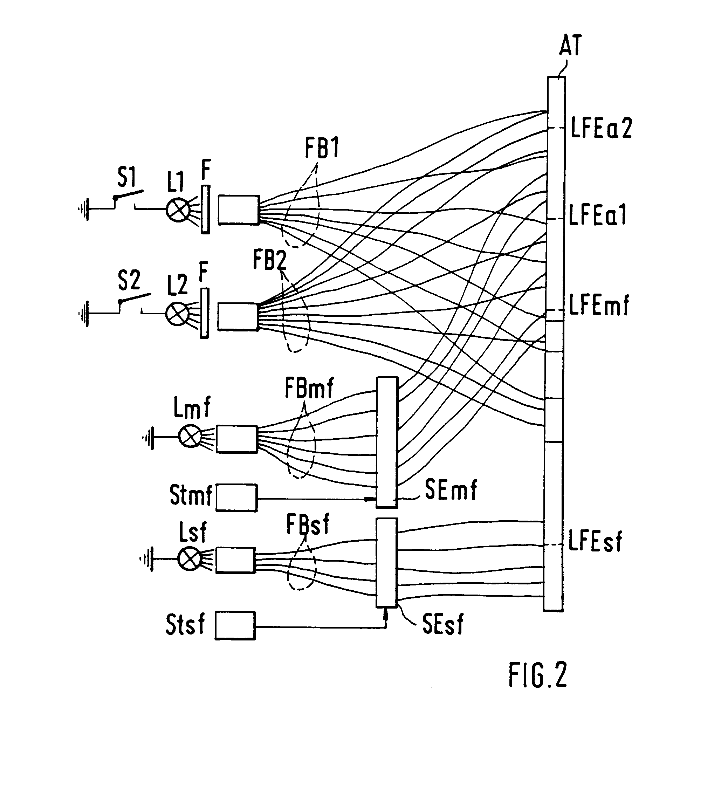

In einer Anzeigetafel AT nach Fig. 1 läßt sich mit festgesteckten Lichtleitfaserenden LFEa1 ein Dreieck als Umrahmung eines Verkehrszeichens darstellen. Dazu sind in einem Raster auf der Dreieckrahmen-Fläche die Enden von Lichtleitfasern LF eines Bündels FB1 gleichmäßig verteilt angeordnet, wie Fig. 2 zeigt. Das Bündel FB1 wird über eine Lichtquelle L1 und ein Filter F beleuchtet, wenn ein Schalter S1 geschlossen ist. In gleicher Weise werden die Lichtleitfasern eines weiteren Bündels FB2 mit Lichtleitfaserenden LFEa2 auf der Kreisringfläche der Anzeigetafel AT gesteckt. Das weitere Bündel FB2 wird über eine weitere Lichtquelle L2 und ebenfalls ein Filter F beleuchtet, wenn ein weiterer Schalter S2 geschlossen ist.

Auf diese Weise lassen sich mit den Schaltern S1 und S2 nicht veränderbare Anzeigeteile A1 und A2 als Dreieckrahmen und als Kreisringrahmen fest vorgeben und für mehrere Anzeigen verwenden. Die nicht veränderbaren Anzeigenteile A1 und A2 sind also fest vorgegeben und lassen sich allein durch Einschalten der für die gewünschte Anzeige erforderlichen Lichtquelle L1 oder L2 auswählen. Bei dem Ausführungsbeispiel werden rote Filter F verwendet, da die Anzeigevorrichtung verschiedene Verkehrszeichen mit einer roten Dreieck- oder Kreisumrahmung wiedergeben können soll.

Die nicht veränderbaren Anzeigeteile A1 und A2 umrahmen ein Matrixfeld MF von matrixförmig, d.h. in Zeilen und Spalten, angeordneten Lichtleitfaserenden LFEmf, mit denen ein beliebig wählbarer Anzeigeteil B dargestellt werden kann. Dieser beliebig wählbare Anzeigeteil B kann ein Piktogramm oder eine Zahlenangabe sein.

Außerdem ist unterhalb der aus einem nicht veränderbaren Anzeigeteil A1 oder A2 und dem beliebig wählbaren Anzeigeteil B gebildeten Anzeige ein Schriftfeld SF zur Wiedergabe einer Schrift C oder einer Laufschrift angeordnet.

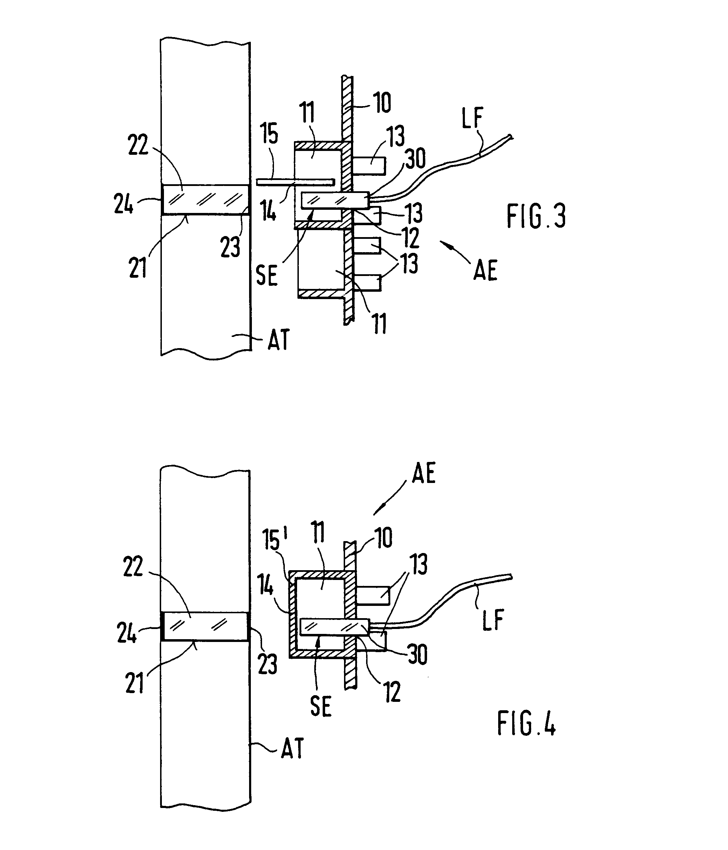

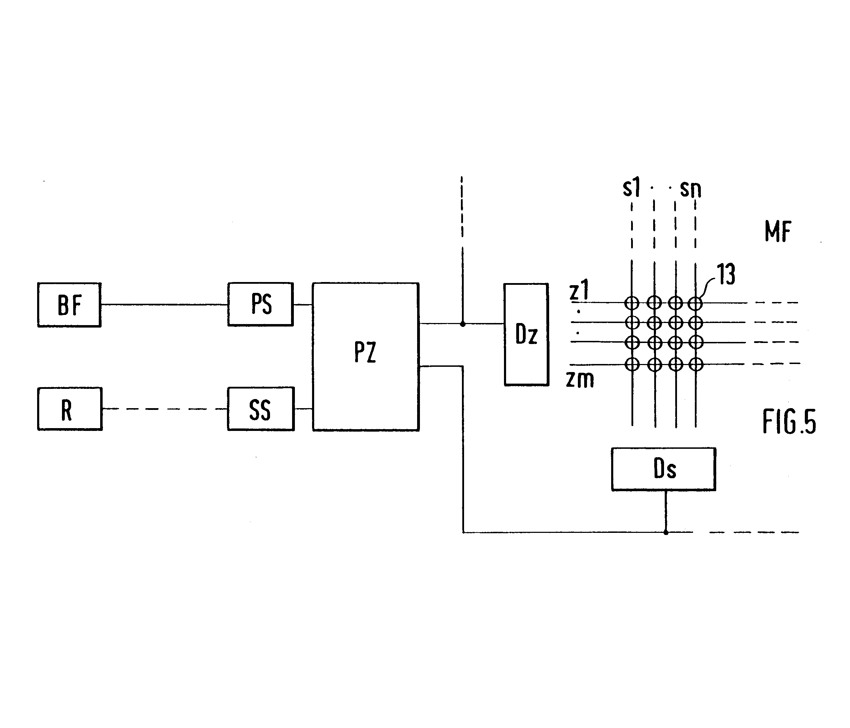

Wie die Fig. 2 zeigt, wird ein Bündel FBmf für das Matrixfeld MF über eine Lichtquelle Lmf dauernd beleuchtet. Für jede Lichtleitfaser des Bündels FBmf ist eine individuelle Schalteinrichtung SE nach Fig. 3 und 4 vorgesehen, die eine Schaltmatrix SEmf bilden. Auch die Lichtleitfasern eines Bündels FBsf für das Schriftfeld SF werden durch eine Lichtquelle Lsf dauernd beleuchtet. Jeder Lichtleitfaser des Bündels FBsf ist eine individuelle Schalteinrichtung SE nach Fig. 3 und 4 zugeordnet, die eine Schaltmatrix SEsf bilden. Auf diese Weise ist jedes Anzeigeelement AE im Matrixfeld MF und im Schriftfeld SF individuell "ein- oder ausschaltbar", d.h. in die Anzeige- oder Nichtanzeigestellung einstellbar. Wie die Ansteuerung erfolgt, wird später anhand des Prinzipschaltbildes nach Fig. 5 erläutert.

Der Aufbau der Anzeigeelemente AE des Matrixfeldes MF der Anzeigevorrichtung nach der Erfindung wird anhand der Fig. 3 und 4 erläutert. Ein Gehäuse 10 umfaßt zur Anzeigeseite hin offene Fächer 11 zum drehbaren Lagern von Klappen 15. Dieses Gehäuse 10 besteht im wesentlichen aus einer Platte, die zur Anzeigeseite hin im Querschnitt quadratische Fächer 11 aufweist, deren Wände an der Platte angeformt sind. Dieses Gehäuse 10 kann auch aus mehreren, aneinandergereihten Teilgehäusen zusammengesetzt sein, um eine matrixförmige Anzeigevorrichtung ausreichender Größe aufzubauen. Die Fächer 11 sind in Zeilen und Spalten angeordnet. In jedem benötigten Fach 11 ist eine Klappe 15 mit seiner Drehachse 14 drehbar gelagert und zwar so, daß diese Klappe 15 in der in Fig. 4 gezeigten Nichtanzeigestellung, das zugeordnete Fach 11 abdeckt. In den Boden des Faches 11 ist eine Bohrung 12 eingebracht, die einen am Ende der Lichtleitfaser LF angebrachten Abstrahlkörper 30 aufnimmt. Die Bohrung 12 ist dabei so ausgelegt, daß der Abstrahlkörper 30 durch Preß- und/oder Paßsitz darin gehalten ist und in das zugeordnete Fach 11 ragt. Die Anordnung ist dabei so, daß der Abstrahlkörper 30 außerhalb der Drehachse 14 der Klappe 15 liegt, die vorzugsweise diagonal im Fach 11 verläuft und im Bereich der offenen Seite des Faches 11 angeordnet ist. Hinter dem Fach 11 sind auf der Außenseite des Bodens, d.h. der Platte, der Klappe 15 zugeordnete Elektromagnetpaare 13 angebracht, mit dem die beiden Stellungen der Klappe 15 eingestellt werden. In der Anzeigestellung nach Fig. 3 kann sich die Klappe 15 nur noch um 90° drehen, da der Abstrahlkörper 30 einen Anschlag für die Klappe 15 bildet. Das aus dem Abstrahlkörper 30 austretende Licht wird freigegeben und kann zu einem Lichtkollektor 22 gelangen, der vor dem Abstrahlkörper 30 in der Anzeigetafel AT festgelegt ist. Der Abstand der Anzeigetafel AT ist so gewählt, daß sich die Klappen 15 in die Anzeigestellung nach Fig. 3 einstellen können. Die Lichtkollektoren 22 sind im Querschnitt rund und als Abschnitte eines Glas- oder eines durchsichtigen Kunststoffstabes ausgebildet, wobei zumindest ihre den Abstrahlkörpern 30 zugekehrten Stirnseiten 23 poliert sind, um eine ausreichende Kollektorwirkung zu erreichen. Um die Montage zu vereinfachen, ist auch die Stirnseite 24 der Lichtkollektoren 22 auf der Sichtseite, d.h. Anzeigeseite, poliert. Die Stirnseiten 23 und 24 der Lichtkollektoren 22 schließen dabei etwa bündig mit den zugekehrten Seiten der Anzeigetafel AT ab. Die Anzeigetafel AT ist mit Bohrungen 21 versehen, die die Lichtkollektoren 22 im Paß- und/oder Preßsitz aufnehmen und festhalten.

Die Elektromagnetpaare 13 haben eine Remanenz, so daß die jeweils eingestellte Stellung der Klappen 15 aufrechterhalten wird, bis eine Ansteuerung für die andere Stellung erfolgt. Jedem Fach 11, d.h. jeder Klappe 15, ist daher ein Elektromagnetpaar 13 zugeordnet. Die jeweils einen Elektromagnete der Elektromagnetpaare 13 dienen zur Einstellung und Aufrechterhaltung der Anzeigestellung nach Fig. 3, während bei der Erregung der jeweils anderen Elektromagnete der Elektromagnetpaare 13 die Klappen 15 in die Nichtanzeigestellung nach Fig. 4 gebracht und darin festgehalten werden. In der Nichtanzeigestellung verschließen die Klappen 15 die zugeordneten Fächer 11, wobei eine Seitenwand des Faches 11 als Anschlag dient. Die beleuchtete Lichtleitfaser LF mit dem Abstrahlkörper 30 wird dabei abgedeckt, so daß kein Licht auf den zugeordneten, vorgeschalteten Lichtkollektor 22 gelangen kann. Die Stirnseite 24 des Lichtkollektors 22 bleibt dabei absolut dunkel, so daß zwischen der Anzeigestellung und der Ausgangsstellung einer Klappe 15 am Lichtkollektor 22 ein sehr hohes Schaltverhältnis von Hell und Dunkel erreicht ist.

Die Anzeigevorrichtung ist im Bereich des Matrixfeldes MF und des Schriftfeldes SF in Matrixform aufgebaut, wobei die Klappen 15 mit den Elektromagnetpaaren 13 in Zeilen z1 bis zm und Spalten s1 bis sn angeordnet sind. Die Verdrahtung kann eine Leiterplatte übernehmen, auf die das Gehäuse 10 mit den Elektromagnetanschlüssen aufgesteckt und verlötet wird. Dabei bilden die Einstellspulen der Elektromagnetpaare 13 die Einstellmatrix, während die Rückstellspulen der Elektromagnetpaare 13 die Rückstellmatrix bilden.

Die Ansteuerung erfolgt, wie Fig. 5 zeigt, über einen Prozessor PZ, der die Zeilen z1 bis zm über einen Zeilendekoder Dz nacheinander auswählt und einen Spaltendekoder Ds so steuert, daß bei jeder Zeilenansteuerung die Spalten s1 bis sn zeitlich nacheinander angesteuert werden. Auf diese Weise werden alle für eine Anzeige erforderlichen Klappen 15 in die Anzeigestellung nach Fig. 3 gebracht. Die Impulssteuerung genügt, da die Schalteinrichtungen pro Anzeigeelement ein bistabiles Verhalten haben.

Die Ansteuerung der Rückstellmatrix erfolgt in derselben Weise. Die Elektromagnetpaare 13 können über entgegengesetzte Dioden entkoppelt parallel geschaltet und die Klappen 15 dann in einer gemeinsamen Matrix mit Steuerimpulsen unterschiedlicher Polarität eingestellt und rückgestellt werden.

Der Prozessor PZ kann dabei über ein Bedienfeld BF und eine Parallelsteuerung PS die Informationen für die gewünschte Anzeige im Parallelverfahren oder über einen Rechner R und eine Seriensteuerung SS im Serienverfahren erhalten.

**Patentansprüche**

1. Prozessorgesteuerte Anzeigevorrichtung für Wechselverkehrszeichen, die auf einer Anzeigetafel jeweils aus mindestens einem nicht veränderbaren Anzeigeteil und einem beliebig wählbaren Anzeigeteil zusammensetzbar sind, dadurch gekennzeichnet,
daß der nicht veränderbare Anzeigeteil (A1, A2) aus möglichen Anzeigeteilen (A1, A2) auswählbar ist,
daß für jeden nicht veränderbaren Anzeigeteil (A1, A2) getrennte, beleuchtbare Bündel (FB1, FB2) von Lichtleitfasern (LF) vorgesehen sind, deren freie Enden (LFEa1, LFEa2) entsprechend dem zugeordneten, nicht veränderbaren Anzeigeteil (A1 bzw. A2) verteilt in der Anzeigetafel (AT) angeordnet sind,
daß der beliebig wählbare Anzeigeteil (B) mittels eines Matrixfeldes (MF) von Anzeigeelementen (AE) darstellbar ist, wobei jedes dieser Anzeigeelemente (AE) eine beleuchtbare Lichtleitfaser (LF) mit einer individuellen Schalteinrichtung (SE) für die Freigabe oder Sperrung des zugeordneten Lichtweges aufweist, und
daß der ausgewählte, nicht veränderbare Anzeigeteil (A1 bzw. A2) und der im Matrixfeld (MF) eingestellte, wählbare Anzeigeteil (B) gemeinsam angezeigt sind.

2. Prozessorgesteuerte Anzeigevorrichtung nach Anspruch 1,
dadurch gekennzeichnet,
daß den nicht veränderbaren Anzeigeteilen (A1, A2) jeweils zugeordneten Bündeln (FB1, FB2) von Lichtleitfasern (LF) gleich- oder andersfarbige Filter (F) vorschaltbar sind.

3. Prozessorgesteuerte Anzeigevorrichtung nach Anspruch 1 oder 2,
dadurch gekennzeichnet,
daß die nicht veränderbaren Anzeigeteile (A1 bzw. A2) jeweils als dreieckförmige oder runde Anzeige aus gleichmäßig verteilten Lichtleitfaserenden (LFEa1 bzw. LFEa2) ausgebildet sind, die das Matrixfeld (MF) umrahmen.

4. Prozessorgesteuerte Anzeigevorrichtung nach einem der Ansprüche 1 bis 3,
dadurch gekennzeichnet,
daß der nicht veränderbare Anzeigeteil (A1 bzw. A2) durch Einschalten einer dem zugeordneten Bündel (FB1 bzw. FB2) von Lichtleitfasern (LF) zugeordneten Lichtquelle (L1 bzw. L2) auswählbar ist.

5. Prozessorgesteuerte Anzeigevorrichtung nach einem der Ansprüche 1 bis 4,
dadurch gekennzeichnet,
daß die Anzeigetafel (AT) einen zusätzlichen Anzeigeteil (c) aufweist, der als prozessorgesteuertes Matrixfeld ausgebildet ist, das zur Darstellung von Schriften oder Laufschriften verwendbar ist.

6. Prozessorgesteuerte Anzeigevorrichtung nach Anspruch 5,
dadurch gekennzeichnet,
daß der zusätzliche Anzeigeteil (C) als Schriftfeld (SF) unterhalb der aus nicht veränderbarem Anzeigeteil (A1 bzw. A2) und beliebig wählbaren Anzeigeteil (B) gebildeten Anzeige angeordnet ist.

7. Prozessorgesteuerte Anzeigevorrichtung nach einem der Ansprüche 1 bis 6,
dadurch gekennzeichnet,
daß als Anzeigeelement (AE) des beliebig wählbaren Anzeigeteils (B) und des Schriftfeldes (SF) jeweils eine in einem Fach (11) eines Gehäuses (10) drehbar gelagerte Klappe (15) vorgesehen ist,
daß die jedem Anzeigeelement (AE) zugeordnete Lichtleitfaser (LF) mit einem Abstrahlkörper (30) verbunden ist, der im Boden des Faches (11) fest angeordnet und in das Fach (11) außerhalb der Drehachse (14) der Klappe (15) eingeführt ist,
daß die Klappe (15) mittels zweier Elektromagnete (13) steuerbar und mittels deren Remanenz in der Nichtanzeigestellung oder in der Anzeigestellung haltbar ist,
daß die Klappe (15) in der Nichtanzeigestellung das Fach (11) abdeckt und in der Anzeigestellung um 90° verschwenkt an dem Abstrahlkörper (30) anliegt und so das Lichtleitfaserende (LFEmf, LFEsf) freigibt und
daß vor der in der Anzeigestellung befindlichen Klappe (15) in der Anzeigetafel (AT) in Verlängerung des Abstrahlkörpers (30) ein Lichtkollektor (22) festgelegt ist.

8. Prozessorgesteuerte Anzeigevorrichtung nach Anspruch 7,
dadurch gekennzeichnet,
daß der Lichtkollektor (22) als Abschnitt eines Festkörpers aus Glas oder durchsichtigem Kunststoff ausgebildet ist, bei dem zumindest die dem Abstrahlkörper (30) zugekehrte Stirnseite poliert ist.

FIG.1

FIG.2

FIG.3

FIG.4

FIG.5

**Europäisches Patentamt**

**EUROPÄISCHER RECHERCHENBERICHT**

Nummer der Anmeldung

**EP 91 10 7826**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 831 174   (KAWAGUCHIKO SEIMITSU K.K.) <br> * Figuren 2,3; Seite 7, Zeile 27 - Seite 9, Zeile 19 * <br> – – – | 1,7 | G 09 F 9/30 <br> G 08 G 1/09 <br> G 09 G 3/24 |
| D,A | DE-U-8 913 499   (DAMBACH-WERKE GMBH) <br> * Figuren 1,4; Seite 4, Zeile 13 - Seite 5, Zeile 12; Seite 5, Zeilen 20-27; Seite 6, Zeilen 11-15 * <br> – – – | 1,7 | |
| A | DE-A-3 434 355   (D. REIMER et al.) <br> * Figuren 1,2; Seite 7, Zeile 138 - Seite 8, Zeile 157 * <br> – – – – – | 1,7 | |

|  |
|---|
| **RECHERCHIERTE SACHGEBIETE (Int. Cl.5)** |
| F 21 V <br> G 08 G <br> G 09 F <br> G 09 G |

Der vorliegende Recherchenbericht wurde für alle Patentansprüche erstellt

| Recherchenort | Abschlußdatum der Recherche | Prüfer |
|---|---|---|
| Berlin | 09 Oktober 91 | TAYLOR P I |